# EUROPEAN PATENT APPLICATION

(11) **EP 2 305 877 A2**
(43) Date of publication of application: **06.04.2011**
(21) Application number: 09742821.3
(22) Date of filing: 02.05.2009
(51) Int. Cl.: D06F 58/26

(54) **VALVE FOR A GAS HEATER**

(30) Priority: 06.05.2008 KR 20080041816
(71) Applicant: Daewoo Electronics Corporation, Seoul 100-031 (KR)
(72) Inventor: KIM, Chang Hoo, Incheon 407-060 (KR)
(74) Representative: Michalski, Stefan
(86) International application number: PCT/KR2009/002343
(87) International publication number: WO 2009/136715

(57) **Abstract**

The present invention relates to a valve for a gas heater. The present invention comprises an ON/OFF valve for determining whether or not a working fluid is supplied, and a proportional control valve which is linked to the ON/OFF valve and which adjusts the volume of flow of the working fluid once supply has started. The proportional control valve is equipped with a main body having a passageway part through which the working fluid passes, and with a plunger which is incorporated in movable fashion in the main body and which opens and closes the passageway part.

## Description

### [Technical Field]

The present invention relates to a valve for a gas heater, and more particularly, to a valve for a gas heater capable of uniformly controlling an output pressure even when an input pressure is rapidly varied, and capable of preventing leakage of gas.

### [Background Art]

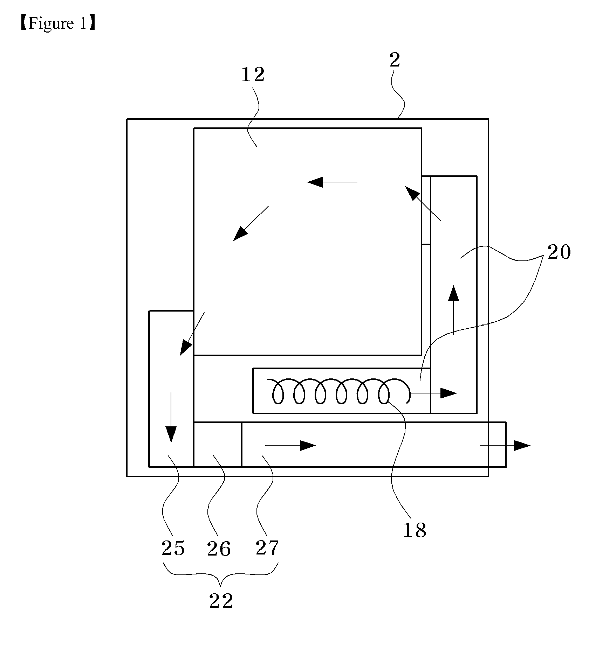

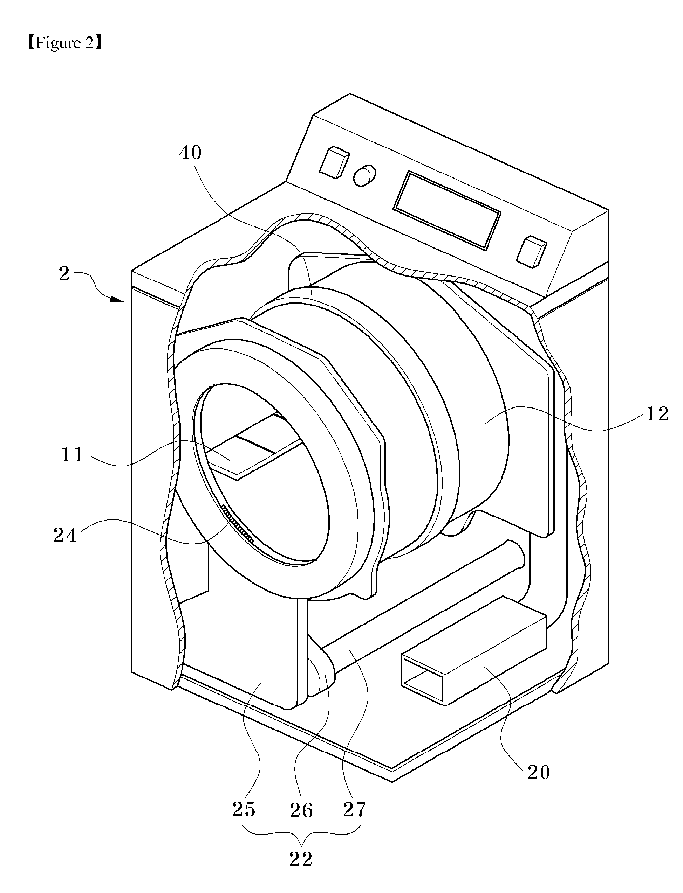

FIG. 1 is a schematic diagram showing a flow path of a conventional dryer and FIG. 2 is a partially broken perspective view of the conventional dryer.

Referring to FIGs. 1 and 2, the conventional dryer includes a cabinet 2 which forms an external appearance of the dryer and is provided with an opening formed in front thereof and through which laundries to be dried are put into the dryer, a drum 12 which is rotatably mounted inside the cabinet 2 to accommodate the laundries to be dried and has opened front and rear portions for allowing air to pass therethrough, a heater 18 which is disposed inside the cabinet 2 to heat the air sucked into the cabinet 2, an intake duct 20 which guides the heated air passed through the heater 18 to the rear of the drum 12, an exhaust unit 22 which exhausts the air polluted by drying the laundries to the outside of the cabinet 2, a blower fan (not shown) which is installed in the exhaust unit 22, and a motor (not shown) and a belt 40 which drive the drum 12 and the blow fan to be rotated. A lifter 11 is mounted on an inner peripheral surface of the drum 12 to lift up and drop the laundries to be dried.

The exhaust unit 22 includes a lint duct 25 which filters foreign substances from the air passing therethrough by a filter 24 mounted therein, a fan housing 26 which communicates with the lint duct 25 and houses the blower fan and an exhaust duct 27 which communicates with the fan housing 26 at one end thereof and extends to the outside of the cabinet 2 at the other end.

Operation of the conventional dryer having the above described structure will be described.

First, by operating the dryer after putting the laundries to be dried into the drum 12 and closing a door, the motor is driven to rotate the drum 12 and the blower fan and the heater 18 is operated together.

At this time, as the drum 12 is rotated, the laundries to be dried in the drum 12 are lifted up and dropped by the lifter 11. External air is sucked in the heater 18, heated to air with high temperature and low humidity and then supplied to the inside of the drum 12 through the intake duct 20.

The air with high temperature and low humidity supplied to the inside of the drum 12 is brought into direct contact with the laundries to dry the laundries and changed to air with low temperature and high humidity. While drying the laundries, the air is moved toward the front of the drum 12 and then exhausted to the outside of the dryer through the exhaust unit 22.

### [Disclosure]

### [Technical Problem]

In the conventional valve for a gas heater, an entire contact plane on which a plunger and a passage part come to contact with each other should be precisely machined since the passage part through which gas passes and the plunger which opens and closes the passage part are in planar contact with each other. Therefore, fabrication of the valve is complex and thus a defect rate is increased and unintended gas leakage occurs.

Therefore, it is required to improve the problems.

Embodiments of the present invention are directed to a valve for a gas heater capable of being easily fabricated and preventing unintended gas leakage.

### [Technical Solution]

In one embodiment, a valve for a gas heater includes an on-off valve for determining supply of a working fluid; and a proportional control valve connected to the on-off valve and controlling a flow rate of the working fluid of which supply has been initiated, wherein the proportional control valve is provided with a body having a passage part through which the working fluid passes and a plunger which is movably installed in the body and open and closes the passage part, and the passage part and the plunger are in linear contact with each other.

Preferably, the plunger is provided with a plug part having a diameter larger than that of the passage part, and the passage part is provided with a bended part which comes in linear contact with the plug part.

More preferably, the plug part which comes in linear contact with the bended part is provided with an inclined surface.

More preferably, the bended part is provided with a sealing member.

Preferably, the plunger is provided with a plug part having a semicircular section and having a diameter larger than that of the passage part, and the passage part is provided with a bended part which comes in multiple linear contact with the plug part.

More preferably, the plug part which comes in linear contact with the bended part is provided with an inclined surface, and the bended part includes a first bended part which comes in linear contact with the inclined surface, and a second bended part which forms a step portion together with the first bended part and comes in linear contact with a lower portion of the inclined surface with which the first bended part comes in linear contact.

More preferably, the first bended part and the second bended part are provided with a sealing member.

### [Advantageous Effects]

According to the valve for a gas valve of the present invention, it is possible to facilitate fabrication of the valve and lower a defect rate since the passage part through which gas passes and the plunger which opens and closes the passage part come to linear contact with each other.

Also, according to the valve for a gas valve of the present invention, it is possible to prevent unintended gas leakage when gas supply is cut off.

Further, according to the valve for a gas valve of the present invention, it is possible to prevent malfunction since pressure variation at an outlet of the valve can be smoothly made through the diaphragm even though a pressure of an inlet of the valve is instantly increased.

### [Description of Drawings]

The above and other aspects, features and advantages of the present invention will become apparent from the following detailed description in conjunction with the accompanying drawings, in which:
FIG. 1 is a structural view showing a flow path of a conventional dryer.
FIG. 2 is a partially broken perspective view of the conventional dryer.
FIG. 3 is a structural view illustrating a dryer having a valve for a gas heater in accordance with an embodiment of the present invention.
FIG. 4 is an exploded perspective view illustrating a gas heater having the valve in accordance with an embodiment of the present invention.
FIG. 5 is a perspective view illustrating the valve for a gas heater in accordance with an embodiment of the present invention.
FIG. 6 is a sectional view illustrating the valve for a gas heater in accordance with an embodiment of the present invention.
FIG. 7 is a sectional view illustrating a proportional control valve in accordance with an embodiment of the present invention.
FIG. 8 is a view illustrating an intake flow path of the dryer having a valve for a gas heater in accordance with an embodiment of the present invention.
FIG. 9 is a view illustrating a circulation flow path of the dryer having a valve for a gas heater in accordance with an embodiment of the present invention.
FIG. 10 is a view illustrating an exhaust flow path of the dryer in accordance with an embodiment of the present invention.
FIG. 11 is a partially enlarged view of a proportional control valve in accordance with another embodiment of the present invention.

### [Best Mode]

Hereinafter, an exemplary embodiment of the present invention will be described with reference to accompanying drawings. For convenience of description, a dryer provided with a valve for a gas heater will be described by way of example. It should be noted that the drawings are not to precise scale and may be exaggerated in thickness of lines or size of components for the purpose of convenience and clarity only. Furthermore, terms used herein are defined in consideration of functions in the present invention and can be changed according to the custom or intention of users or operators. Thus, definition of such terms should be determined according to overall disclosures set forth herein.

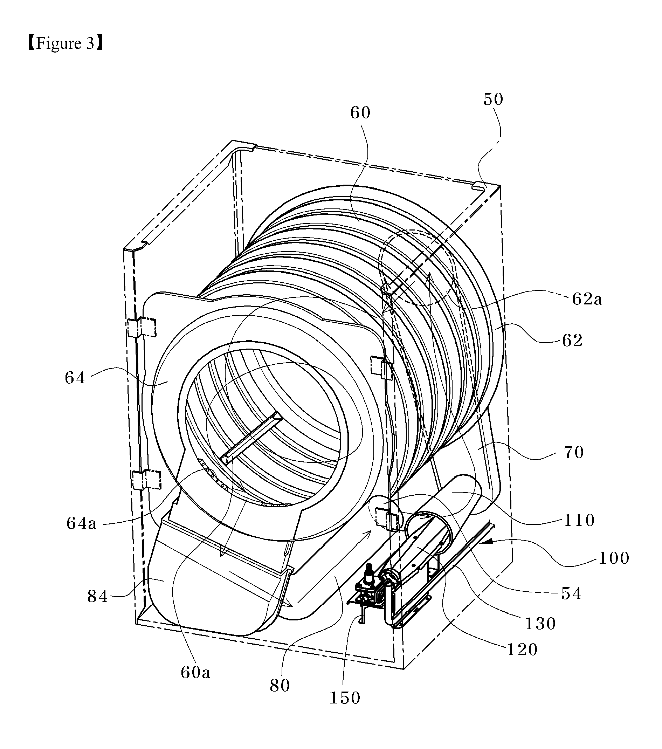

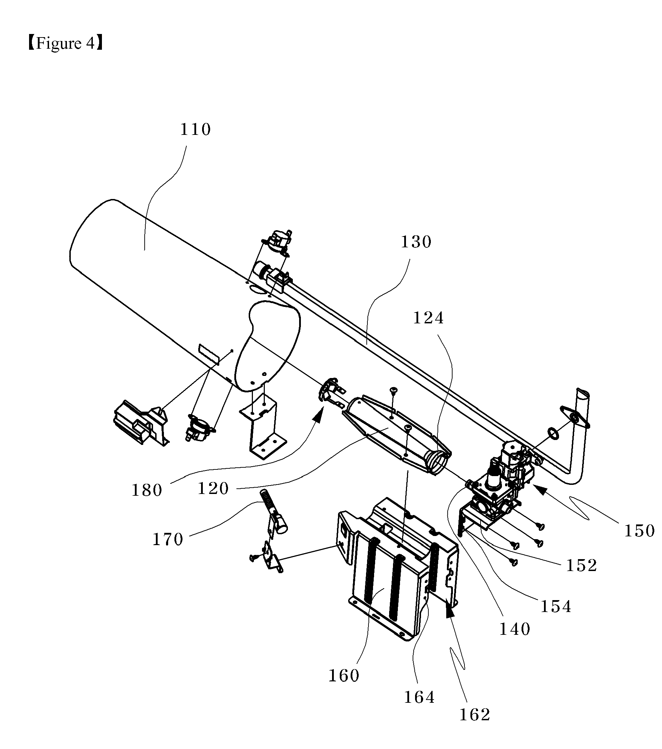

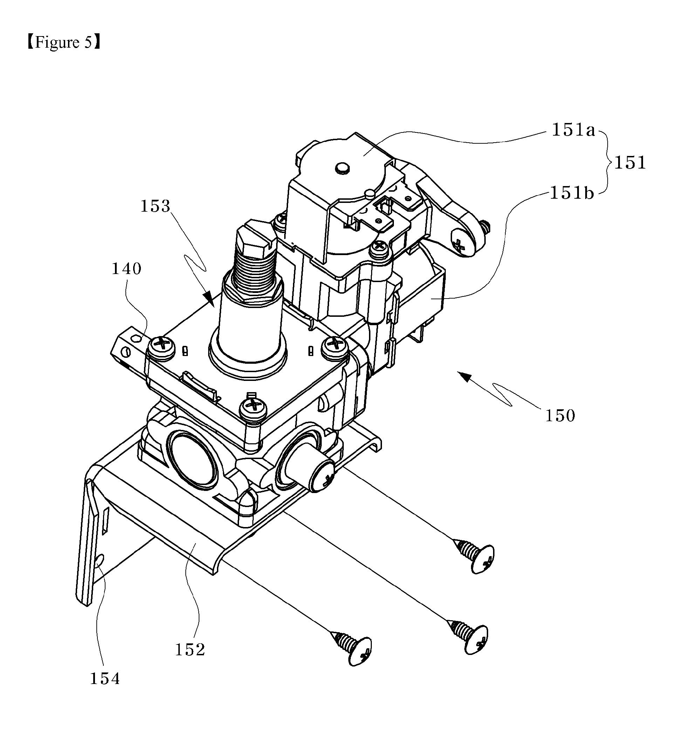

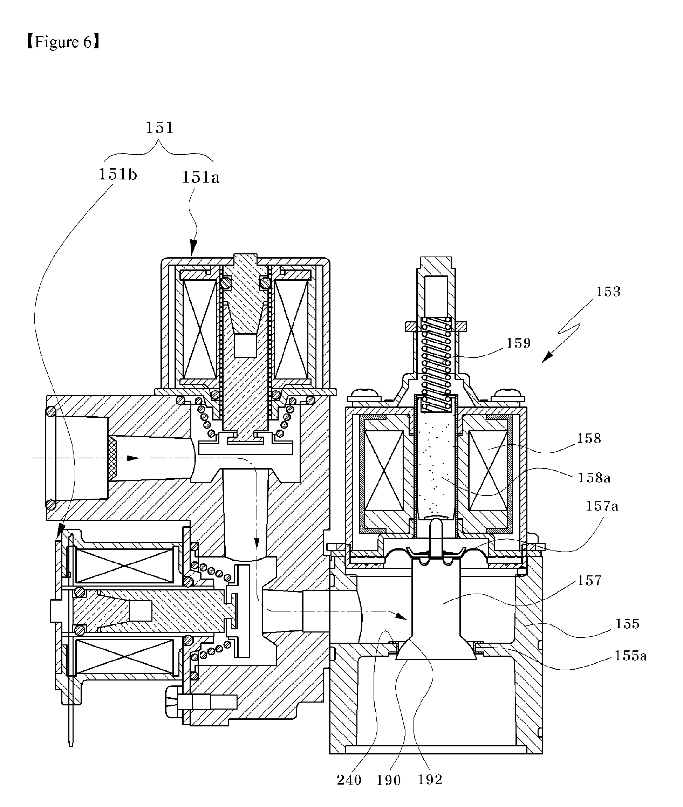

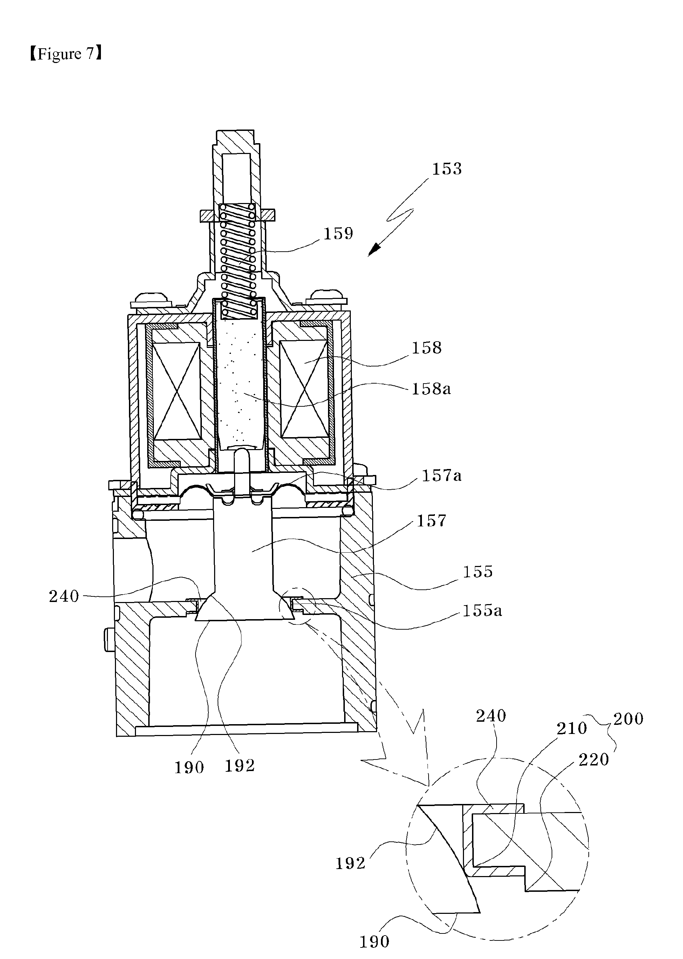

FIG. 3 is a structural view illustrating a dryer having a valve for a gas heater in accordance with an embodiment of the present invention and FIG. 4 is an exploded perspective view illustrating a gas heater having the valve in accordance with an embodiment of the present invention. FIG. 5 is a perspective view illustrating the valve for a gas heater in accordance with an embodiment of the present invention, FIG. 6 is a sectional view illustrating the valve for a gas heater in accordance with an embodiment of the present invention and FIG. 7 is a sectional view illustrating a proportional control valve in accordance with an embodiment of the present invention.

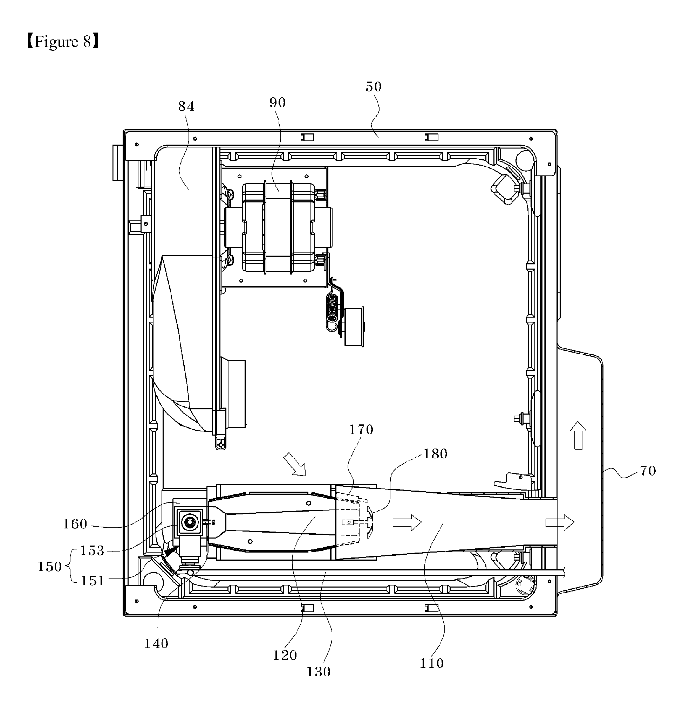

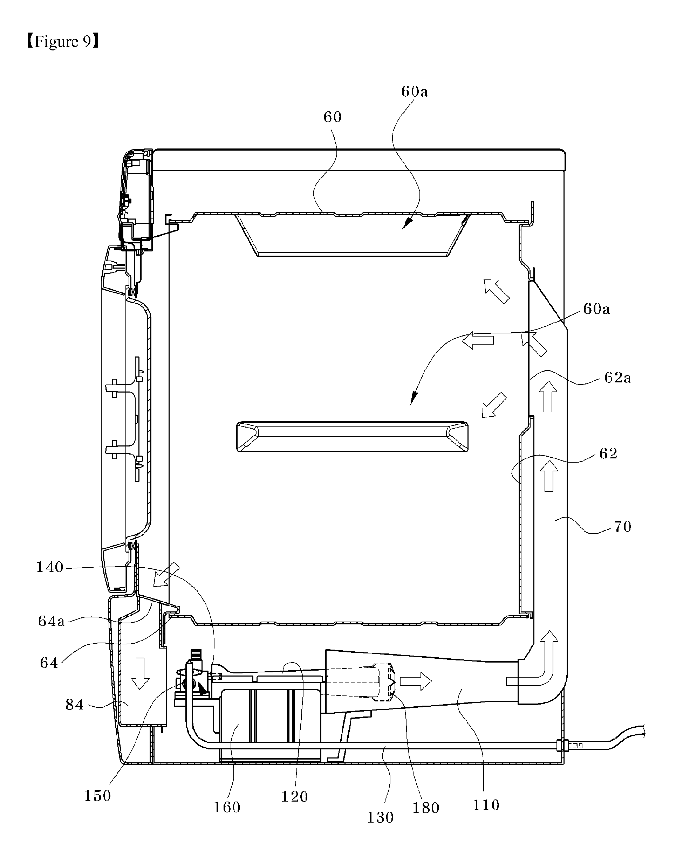

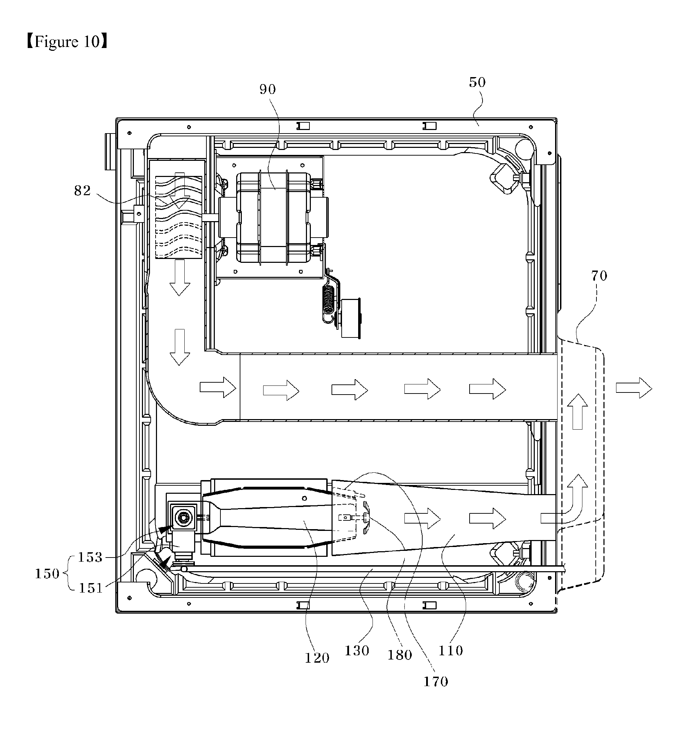

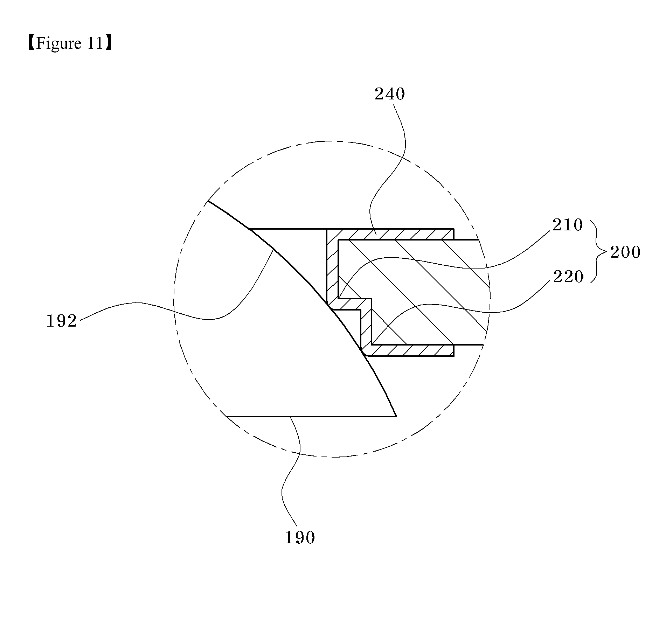

Also, FIG. 8 is a view illustrating an intake flow path of the dryer having a valve for a gas heater in accordance with an embodiment of the present invention, FIG. 9 is a view illustrating a circulation flow path of the dryer having a valve for a gas heater in accordance with an embodiment of the present invention and FIG. 10 is a view illustrating an exhaust flow path of the dryer in accordance with an embodiment of the present invention. FIG. 11 is a partially enlarged view of a proportional control valve in accordance with another embodiment of the present invention.

Referring to FIGs 3 to 11, a dryer in accordance with an embodiment of the present invention includes a cabinet 50 which has a predetermined space therein and is provided with an opening and discharge port 54, a drum 60 which rotatably mounted in an inside of the cabinet 50 to accommodate the laundries to be dried, a lifter 60a which is mounted on an inner wall of the drum 60 to lift up the laundries to be dried, an intake duct 70 which guides air inside the cabinet 50 to the inside of the drum 60, a gas heater 100 installed in the intake duct 70, an exhaust fan 82 (refer to FIG. 10) which is provided between the drum 60 and the discharge port 54, an exhaust duct 80 which is provided between the exhaust fan 82 and the discharge port 54 and a driving motor 90 (refer to FIG. 10) which is connected with a rotation shaft of the exhaust fan 82.

When power is applied to the driving motor 90, the exhaust fan 82 is rotated to circulate air and the air flowed in the inside of the cabinet 50 is changed high temperature air while passing the gas heater 100.

The air is supplied to the inside of the drum 60 along the intake duct 70 and in brought into contact with the laundries to perform drying operation or sterilizing operation.

After that, the air exhausted by the exhaust fan 82 is flowed along the exhaust duct 80 and exhausted to an outside through the discharge port 54 of the cabinet 50, thereby completing the circulation of the air.

The drum 60 is formed in a cylindrical shape with opened front portion, which corresponds to the opening, and rear portion, and is rotatably mounted to a support panel 62 which is formed with a through hole part 62a.

The support panel 62 is mounted at a rear side of the cabinet 50 to rotatably support the drum 60. Also, the through hole part 62a of the support panel 62 is communicated with the intake duct 70.

A front panel 64 is installed between the front end portion of the drum 60 and the opening of the cabinet 50 and is formed with an exhaust hole 64a at a lower end portion thereof.

The exhaust hole 64a is connected with a connection duct 84 which is extended toward the exhaust fan 82, and a housing (not shown) for housing the exhaust fan 82 therein is placed between the connection duct 84 and the exhaust duct 80.

The intake duct 70 is extended from the gas heater 100 to the through hole part 62a. Therefore, the air is changed to air having a temperature higher than a predetermined temperature while passing through the gas heater 100 and flowed along the intake duct 70 to be supplied to the inside of the drum 60 through the through hole part 62a.

At this time, since a contact area between the high temperature air and the laundries to be dried is increased as the drum 60 connected with the driving motor 90 by a belt (not shown), the efficiency of the drying and sterilizing operation is enhanced.

The gas heater 100 includes a gas pipe 130 for supplying gas, a valve 150 for controlling supply and cutoff of gas and an amount of the supplied gas, a nozzle 140 provided at a side of the valve 150, a mixing pipe 120 placed corresponding to the nozzle 140 to mix the gas and the air, an ignition plug 170 mounted on the mixing pipe 120 to generate sparks, a guide duct 110 placed at an outside of the mixing pipe 120 to guide the heated air, a bracket 160 for mounting the mixing pipe 120 to the cabinet 50, and a flame holder 180 placed in the mixing pipe 120 to prevent that a flame produced by the ignition plug 170 becomes larger than a predetermined size.

As the valve 150 is opened, the gas is supplied to the mixing pipe 120 along the gas pipe 130. Then, the gas is mixed with the air in the cabinet 50 and injected to the outside of the mixing pipe 120 and the flame is produced by the sparks generated in the ignition plug 170.

Size and production position of the flame are controlled by the flame holder 180, so that the flame is placed inside the guide duct 110. The air flowed in along the guide duct 110 is changed to a hot wind with a high temperature while passing through the flame.

The bracket 160 has a grove part 160a which is formed at an upper face thereof and in which the mixing pipe 120 is seated, and a fixing face 160b which is formed at a rear side (left side in FIG. 4) and on which the ignition plug 170 is mounted.

The valve 150 is mounted on the bracket 160 by a fixing piece 152 and the fastening part 162 is provided at a front side (right side in FIG. 4) of the bracket 160 to be coupled to the fixing piece 152.

Upon installation or replacement of the valve 150, assembling of the valve 150 is completed by fixing the valve 150 to the fixing piece 152 and coupling the fixing piece 152 to the fastening part 162 formed at the front side of the bracket 160.

The fixing piece 152 is a bended panel having a '┐' shape and has an upper face on which the valve 150 is mounted and a side face which comes in close contact with the fastening part 162 and is formed with through hole parts 154.

As a fastening member passes through the through hole part 154 to be fastened to the fastening hole part 164 of the fastening part 162, the valve 150 is mounted on the bracket 160 through the fixing piece 152.

At this time, the valve 150 coupled to the bracket 160 by the fixing piece 152 can be approached from the front side of the dryer through a gap between the front panel 64 and lower face of the cabinet 50.

Therefore, upon control, repair or replacement for the valve 150, it is possible to perform the operation using the gap and thus omit the operation of separating the front panel 64 from the cabinet 50 as has been conventionally done.

The valve 150 includes an on-off valve 151 which determines supply of working fluid, i.e., gas, and a proportional control valve 153 which is connected to the on-off valve 151 to control a flow rate of the gas of which supply has been initiated. When the on-off valve 151 is opened, the gas supply is initiated and the flow rate of the gas supply is controlled by operation of the proportional control valve 153.

Since it is possible to vary an intensity of the flame generated in the gas heater 100 by the operation of the valve 150, it is possible to vary a temperature of hot wind which passes through the flame and is supplied to the inside of the drum 60. As such, it is possible to supply the hot wind with a suitable temperature according to an amount or a kind of the laundries to be dried as it is possible to control the temperature of the hot wind.

The on-off valve 151 consists of a first on-off valve 151a and a second on-off valve 151b in order to prevent an accident due to malfunction of the valve 150, and the supply of the gas is initiated only when the two valves, i.e., the first on-off valve 151a and the second on-off valve 151b are opened at the same time.

The proportional control valve 153 includes a body 155 provided with a passage part 155a which forms a passage for allowing a working fluid to pass therethrough, a plunger 157 movably installed in the body 155 to open and close the passage part 155a, a coil part 158 which is coupled to the body 155 and moves the plunger 157 when power is applied, and a control part (not shown) which controls an amount of current supplied to the coil part 158.

If the amount and kind of the laundries to be dried is determined by manipulation of a user, the control part determines the amount of the current supplied to the coil part 158. After that, when the power is applied to the coil part 158, a magnetic field is generated around the plunger 157 and the plunger 157 is moved down. By the movement of the plunger 157, the passage part 155a is opened and the supply of the gas is initiated. Since the movement of the plunger 157 is determined by the intensity of the magnetic field formed in the coil part 158, it is possible to control an amount of the supplied gas by controlling the intensity of the magnetic field.

A plug part 190 is provided at a lower end of the plunger 157. The plug part 190 has a semicircular section and has a larger diameter than the diameter of the passage part 155a, and is thus is able to control the flow rate of the gas supplied through the passage part 155a. That is to say, the passage part 155a is closed or an opened degree of the passage part 155a is reduced as the plunger 157 is moved toward the coil part 158 and the passage part 155a is opened or an opened degree of the passage part 155a is increased as the plunger 157 is moved away from the coil part 158, thereby capable of controlling the flow rate of the gas supplied to the passage part 155a.

Also, a mover 158a moved by the coil part 158 is connected to an upper end of the plunger 157 and an elastic member 159 is connected to an end of the mover 158a. Therefore, when the power supply to the coil part 158 is interrupted, the mover 158a and the plunger 157 are moved toward the coil part 158 by a restoring force of the elastic member 159 to close the passage part 155a.

The diaphragm 157a is provided between the plunger 157 and the body 155 and supports the plunger 157 movably in an up-down direction. Since the gas pushes the plunger 157 down and at the same time pushes the diaphragm 157a up when a pressure of the gas inputted to the body through the on-off valve 155 is rapidly increased, rapid opening of the plunger 157 in downward direction is inhibited.

The passage part 155a and the plunger 157 are in linear contact with each other to inhibit input and output of the gas, and design and fabrication of the valve is more facilitated since preciseness is required only on the linear contact portion as compared to a conventional case requiring the preciseness on the entire planar contact portion.

The plunger 157 is provided with the plug part 190 which closes the passage part 155a, and the passage part 155a is provided with a bended part 200 which comes in contact with the plug part 190.

The plug part 190, more specifically, a surface of the plug part 190 in the linear contact with the bended part 200 is formed with an inclined surface 192. Therefore, the linear contact between the plunger 157 and the passage part 155a is facilitated.

The bended part 200 includes a first bended part 210 which comes in contact with the inclined surface 192 and a second bended part 220 which is formed below the first bended part 210 and forms a step portion together with the first bended part 210. In order prevent leakage of the gas, not only the first bended part 210 but also the second bended part 220 can come into linear contact with the inclined surface 192. That is to say, the passage part 155a can have the bended part 200 which comes in multiple linear contact with the inclined surface 192 of the plug part 190 (refer to FIG. 11).

The bended part 200 may be provided with a sealing member 240. Referring to Fig. 7, the sealing member 240 is fitted onto the first bended part 210 which is in linear contact with the inclined surface 192, and referring to FIG. 11, the sealing member 240 is fitted onto the first bended part 210 and the second bended part 220 which are in linear contact with the inclined surface 192.

The sealing member 240 has a ring shape of which center is hollowed and is fitted onto the bended part 200 which is in linear contact with the inclined surface 192. Accordingly, the leakage of the gas can be more firmly prevented since the sealing member formed of elastic material is placed between the bended part 200 and the inclined surface 192 when the bended part 200 comes in linear contact with the inclined surface 192.

When the valve 150 is closed and the plunger 157 and the passage part 155a come in close contact with each other, it is possible to firmly prevent that the gas is leaked through a gap between the plunger 157 and the passage part 155a since not only the inclined surface 192 and the bended part 200 come in linear contact with each other but also the sealing member 240 is placed between the bended part 200 and the inclined surface 192.

Also, when the valve 150 is closed and the plunger 157 and the passage part 155a come in close contact with each other, the plunger 157 is moved toward the coil part 158 by the elastic member 159. Therefore, the sealing member 240 comes in close contact with the inclined surface 192 and it is thus possible to firmly inhibit generation of the gap between the inclined surface 192 and the bended part 200.

The mixing pipe 120 is provided with a mixing part 124. Since the mixing part 124 includes an opening which is larger than the nozzle 140, the gas injected from the nozzle 140 and air flowed in are mixed with each other in the mixing part 124.

The mixing part 124 is formed in such a manner that an end of the mixing part 120 is extended and has a hollow cylindrical shape with an opening formed at the end thereof corresponding to the nozzle 140.

Hereinafter, operation of the dryer having the valve for a gas heater in accordance with an embodiment of the present invention will be described.

When a user manipulates an operation button (not shown), the power is applied to the driving motor 90 to rotate the exhaust fan 82 and the drum 60.

By the driving of the exhaust fan 82, the air flowed in the inside of the cabinet 50 is moved to an upside of the cabinet 50 along the intake duct 70 vertically formed on a rear face of the cabinet 50.

When the valve 150 is opened, gas supplying along the gas pipe 130 is begun and the supplied gas passes through the nozzle 140 to be injected to the inside of the mixing pipe 120.

The gas is primarily mixed with the air flowed in through the nozzle 140 and secondarily mixed with the air flowed in through the space between the mixing pipe 120 and the nozzle 140.

The mixture of the air and gas is injected through the mixing pipe 120 and a flame is produced by operation of the ignition plug 170.

At this time, since the injected mixture collides with the flame to form a vortex, the flame is laterally spread in the vicinity of the flame holder 180.

The air flowed in the inside of the intake duct 70 along the guide duct 110 is heated to dry air with a high temperature higher than a predetermined temperature.

After that, the air flowed in the inside of the drum 60 through the through hole part 62a is swirled to dry the laundries to be dried.

The front panel 64 placed between the front end portion of the drum 60 and the opening of the cabinet 50 and is formed with an exhaust hole 64a and the air which finished the dry operation is exhausted to the outside of the drum 60 through the exhaust hole 64a.

After that, the air is flowed to the exhaust fan 82 through the connection duct 84 communicated with the exhaust hole 64a, then moved from the exhaust fan 82 along the exhaust duct 80 and exhausted to the outside of the cabinet 50 through the discharge port 54.

The following is operation of the gas heater 100. The valve is opened with the beginning of the dry operation and the gas injected to the mixing pipe 120 through the nozzle 140 is primarily mixed with the air flowed in through the nozzle 140.

In the valve 150, the first on-off valve 151a and the second on-off valve 151b are opened and the supply of the gas is thus initiated, and the amount of the gas supply is determined according to the movement of the plunger 157.

After that, the secondary mixing is performed as the air flowed in the mixing part 124 of the mixing pipe 120 and the primarily mixed mixture are mixed. The mixture is injected to the outside of the mixing pipe 120 and the flame is produced by the ignition plug to supply thermal energy to the air supplied to the intake duct 70. Also, this flame is gathered in a middle of the guide duct 110 by the flame holder 180 to prevent the deformation or damage of the mixing pipe 120 and the intake duct 70.

When the operation is terminated, the first on-off valve 151a, the second on-off valve 151b and the proportional control valve 153 are turned off to cut off the gas supply. At this time, the inclined surface 192 of the plunger 157 and the bended part 200 come in linear contact with each other and the sealing member 240 is placed between the inclined surface 192 and the bended part 200, thereby capable of preventing leakage of the gas.

Although the present invention has been described with reference to the embodiments shown in the drawings, it should be understood that these embodiments are provided for illustrative purpose and that various equivalent modifications and alterations will be apparent to those skilled in the art without departing from the scope and spirit of this invention. In addition, although the present invention has been described with reference to the dryer as specifically described herein, it should be noted that the dryer has been illustrated by way of example, and that the valve for a gas heater of the present invention may be applied to other product, without being limited to the dryer in its application. Therefore, the scope and sprit of the invention is limited only by the claims set forth herein as follows.

## Claims

1. A valve for a gas heater, comprising:
an on-off valve for determining supply of a working fluid; and
a proportional control valve connected to the on-off valve and controlling a flow rate of the working fluid of which supply has been initiated,
wherein the proportional control valve is provided with a body having a passage part through which the working fluid passes and a plunger which is movably installed in the body and open and closes the passage part, and
the passage part and the plunger are in linear contact with each other.

2. The valve of claim 1, wherein
the plunger is provided with a plug part having a diameter larger than that of the passage part, and
the passage part is provided with a bended part which comes in linear contact with the plug part.

3. The valve of claim 2, wherein the plug part which comes in linear contact with the bended part is provided with an inclined surface.

4. The valve of claim 2, wherein the bended part is provided with a sealing member.

5. The valve of claim 1, wherein
the plunger is provided with a plug part having a semicircular section and having a diameter larger than that of the passage part, and
the passage part is provided with a bended part which comes in multiple linear contact with the plug part.

6. The valve of claim 5, wherein
the plug part which comes in linear contact with the bended part is provided with an inclined surface, and
the bended part includes a first bended part which comes in linear contact with the inclined surface, and a second bended part which forms a step portion together with the first bended part and comes in linear contact with a lower portion of the inclined surface with which the first bended part comes in linear contact.

7. The valve of claim 6, wherein the first bended part and the second bended part are provided with a sealing member.
